Europäisches Patentamt

European Patent Office

Office européen des brevets

(19)

(11) Veröffentlichungsnummer: **0 166 433**
**B1**

(12) **EUROPÄISCHE PATENTSCHRIFT**

(45) Veröffentlichungstag der Patentschrift: 05.12.90

(21) Anmeldenummer: 85107898.0

(22) Anmeldetag: 26.06.85

(51) Int. Cl.⁵: **E 02 D 31/00,** E 02 B 3/16,
E 02 D 27/32, B 09 B 1/00 //
B65F1/00

(54) **Vorrichtung zur Fassung von Sickerwasser aus Deponien.**

(30) Priorität: 26.06.84 DE 3423438

(43) Veröffentlichungstag der Anmeldung:
02.01.86 Patentblatt 86/01

(45) Bekanntmachung des Hinweises auf die
Patenterteilung:
05.12.90 Patentblatt 90/49

(84) Benannte Vertragsstaaten:
AT CH GB LI NL

(56) Entgegenhaltungen:
DE-B-1 181 391
DE-B-1 293 442
FR-A-2 178 291
US-A-3 505 820
US-A-4 350 461
US-A-4 358 221
US-A-4 430 021
US-A-4 464 081

(73) Patentinhaber: Ed. Züblin Aktiengesellschaft
Albstadtweg 3
D-7000 Stuttgart-Möhringen (DE)

(72) Erfinder: Wiemer, Jean
Saalburgstrasse 7
D-6242 Kronberg 2 (DE)
Erfinder: Wiemer, Klaus, Dr.-Ing.
Kiefernweg 4
D-6242 Kronberg 2 (DE)

(74) Vertreter: Jackisch, Walter, Dipl.-Ing. et al
Menzelstrasse 40
D-7000 Stuttgart 1 (DE)

**Beschreibung**

Die Erfindung betrifft eine Vorrichtung zur Fassung von Sickerwasser aus Deponien nach dem Oberbegriff des Anspruches 1, wie zum Beispiel aus der US—A—4430021 bekannt.

Bei der Deponierung von Abfällen entstehen Sickerwässer. Diese sind, je nach Art der Abfallzusammensetzung, auf Jahrzehnte bzw. Jahrhunderte hinaus schadstoffbelastet. Nach dem heitigen Stand der Technik werden Deponiesikkerwässer durch Dichtungen aufgefangen, gesammelt und einer Behandlung zugeführt.

Bekannte Dichtungsarten sind mineralische Dichtungen (z.B. Ton, Bentonit mit Wasserglas), Bitumendichtungen oder Foliendichtungen. Ohne den Dichtungen ihre grundsätzliche Eignung für ihre Aufgabe abzusprechen, ist ihre Zuverlässigkeit begrenzt. Dies bestätigen Ergebnisse aus der Praxis bzw. Forschungsvorhaben (Umweltbundesamt, 1984). Lecksuche und Lecksanierung sind Probleme, für die sich bis heute noch keine geeignete Lösung abzeichnet. Als Folge hiervon werden Deponien heute grundsätzlich nicht mehr in den Wasserschutzzonen I, II oder IIIa zugelassen. Diese Einschränkung macht die Standortfindung von Hausmülldeponien in weiten Landesteilen unmöglich. Standorte von Sonderabfalldeponien sind generell schwer durchsetzbar.

Die Sickerwassersammlung erfolgt vorteilhafterweise getrennt aus verschiedenen Parzellen. Der Grund hierfür ist die unterschiedliche Schadstoffbelastung verschiedener Deponieabschnitte. Durch die getrennte Sickerwassersammlung können kontaminierte Deponieabschnitte lokalisiert und die jeweiligen Sickerwässer einer gezielten, angepaßten Behandlung zugeführt werden. Erfolgt diese getrennte Behandlung nicht, werden infolge des Verdünnungseffektes Mischwässer abgezogen, für die eine besondere Behandlung (z.B. dritte Reinigungsstufe) kaum noch in Betracht kommt. Hierdurch werden Schadstoffe unnötigerweise in die Umwelt freigesetzt.

Die Gründe für den fast ausschließlichen Mischwasserabzug sind die ungenügende Zuverlässigkeit von Dränleitungen infolge mangelnder Festigkeit sowie der insgesamt hohe technische Aufwand. Gemäß DIN 4033 in Verbindung mit dem ATV Arbeitsblatt 127 kann der Bruchfestigkeitsnachweis handelsüblicher Dränleitungen für solche Drücke, die in der Deponie üblicherweise vorherrschen, bisher nicht erbracht werden.

Andere Dichtungssysteme, z.B. ROLLINS, USA, bei denen zusätzlich zu mehreren künstlichen Dichtungen noch eine feste Bettung durch Beton geschaffen wird, erhöhen zwar die allgemeine Zuverlässigkeit, unterliegen jedoch im Genehmigungsvollzug, wegen der noch bestehenden Restunsicherheit, den gleichen Vorbehalten wie die anderen Dichtungsarten.

Der Erfindung liegt die Aufgabe zugrunde, die gattungsgemäße Vorrichtung su auszubilden, daß die Zuverlässigkeit des Dichtkörpers jederzeit optisch kontrolliert und die Dichtung im Schadenfall auf einfache Weise und schnell ausgebessert werden kann.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung befindet sich im Bereich unterhalb des Dicktkörpers der Kontrollraum, so daß von ihm aus die Dichtwirkung des Dichtkörpers jederzeit optisch kontrolliert werden kann. Sobald die Dichtung an einer Stelle undicht werden sollte, kann dies vom Kontrollraum aus sofort erkannt werden, so daß augenblicklich Gegenmaßnahmen eingeleitet werden können. Mit der erfindungsgemäßen Vorrichtung ist somit eine Nullemission im Grundwasserkörper möglich. Dadurch wird die Standortfindung für die Deponien wesentlich erleichtert, da eine Verschmutzung des Grundwassers durch Sickerwasser mit Sicherheit ausgeschlossen ist. Deponien können unter Verwendung der erfindungsgemäßen Vorrichtung ggf. in Wasserschutzgebieten errichtet werden. Vom Kontrollraum aus lassen sich ohne Schwierigkeiten die notwendigen Reparaturarbeiten einfach ausführen. Infolge der Sichtkontrolle der Dichtwirkung des Dichtkörpers ist somit eine Langzeitsicherung in sehr einfacher Weise gewährleistet. Durch die lücken- lose Überwach- und Kontrollierbarkeit ist es somit möglich, Sikkerwasseremissionen, gleich welcher Beschaffenheit, zu verhindern und somit auch Wasserschutzzonen in künftige Standortplanungen mit einzubeziehen, die bisher dafür nicht in Frage kommen.

Durch eine separate Erfassung und Probenahme des Sickerwassers unmittelbar am Anfallort kann nach Vorliegen der zugehörigen Analysenergebnisse eine differenzierte Behandlung eingeleitet werden, z.B. eine biologische oder chemische Reinigung, eine dritte Reinigungsstufe, eine Sickerwassereindampfung oder eine Sickerwasserverbrennung. Durch diese differenzierte Behandlung können Umweltbelastungen infolge von Verdünnungseffekten beim Mischwasserabzug verhindert bzw. Kosten eingespart werden. Die Vorzüge der erfindungsgemäßen Vorrichtung lassen sich in Vergleich beispielsweise zue Deponie Hamburg Georgsweder ermessen, bei der sich dioxinhaltige Abwässer mit anderen Abwässern vermischen.

Die Kenntnis der lokalisierten Schadstoffkonzentrationen ermöglicht, gezielte Eingriffe von außen vorzunehmen, beispielsweise durch eine Sanierung durch Ausbaggerung des Schadstoffherdes.

Der Dichtkörper kann aus einer Plattform bestehen, die selbst die Dichtungsfunktion wahrnimmt. Durch die hohe Auflast (40 t/m² und mehr) sind Differenzsetzungen bzw. infolge von Schwindvorgängen Spaltenbildungen zwischen den einzelnen Plattformabschnitten vorauszusehen. Bei einer bevorzugten Ausführungsform wird darum die Hauptdichtungsfunktion von einer abgehängten Dichtung übernommen, die ganzflächig auf der Unterseite der Plattform angeordnet ist. Die abgehängte Dichtung weist zweckmäßig Tiefpunkte auf, zu denen das Sickerwasser strömt und über Nebensammler einem hauptsickerwassersammler zugeführt wird.

Um eine separate Erfassung und Probenahme des Sickerwassers am Anfallort zu erreichen, ist die Dichtkörperoberseite vorzugsweise durch erhabene Feldbegrenzungen feldweise unterteilt. Die erhabenen Feldbegrenzungen bilden gedichtete Trennwände, mit denen die einzelnen, auf diese Weise gebildeten Parzellen gegeneinander abgegrenzt werden und die auf der Oberseite der Plattform angeordnet sind. Am zugehörigen Tiefpunkt der Dichtung sind zweckmäßig Kontrollstutzen zur Sickerwasserprobenahme angeordnet.

Eine bevorzugte Anwendung der erfindungsgemäßen Vorrichtung besteht darin, kontaminierte Standorte nachträglich zu sanieren. Zu diesem Zweck werden zweckmäßig Tunnel dicht an dicht unter den kontaminierten Standort getrieben und somit eine nachträgliche Dichtungsplattform geschaffen. Sofern ein horizontales Auswandern, das sogenannte Migrieren, von Sickerwasser oder Gas aus dem Zwischenraum zwischen der Plattform und der Deponiebasis zu erwarten ist, wird die Deponie zweckmäßig ganz oder teilweise mit einer Dichtwand umgeben, die durch eine gerüttelte Schmalwand, eine Schlitzwand, eine Spundwand o.ä. gebildet ist, die zweckmäßig mit der Plattform eine Einheit bildet. Zur optischen Kontrolle dieser horizontalen Dichtung wird eine zweischalige Ausführung in Form eines Doppelringes mit dazwischen liegendem Hohlraum verwendet, der der optischen Kontrolle und der Fassung von Grundwasser dient, welches ggf. auf den äußeren Dichtring drückt und in die Vorrichtung eindringt.

Als Tunnelformen empfehlen sich, je nach örtlichen Gegebenheiten und Auflast, die verschiedensten bewährten Konstruktionen, als da sind:

die Hamburger Bauweise (Betonkalender II, 1971, S. 263), die Ortbeton-Halbschalenkombination (Betonkalender II, 1971, S. 244), Simplon Tunnel I unter senkrechter Auflast, Apennin Tunnel im drückenden Gebirge, Autobahntunnel Genua-Seravalle, Villestollen Kölner Randkanal und andere bewährte Tunnelkonstruktionen, zu denen auch Vereisungstechniken zählen, die beim Tunnelvortrieb in anstehendem Grundwasser in Betracht kommen.

Der Kontrollraum unterhalb der Plattform ist so hoch, daß er zu Kontroll-bzw. Ausbesserungsarbeiten begangen oder befahren werden kann. Zur Absaugung des heizwertreichen Deponiegases, das, je nach Abfallbeschaffenheit und Milieubedinungen, in Größenordnungen von bis zu 30 m³/t · a anfallen kann, werden vom Kontrollraum her zweckmäßig entsprechende Gassammelleitungen durch die Plattform hindurchgeführt. Dadurch wird die problematische Verlegung von Gassammelleitungen auf der Deponieoberfläche entbehrlich. Der Kontrollraum selbst wird durch Zwangsbelüftung von gefährlichen Gaskonstruktionen freigehalten.

Weitere Merkmale der Erfindung ergeben sich aus den weiteren Ansprüchen, der Beschriebung und den Zeichnungen.

Die Erfindung wird anhand einiger in den Zeichnungen dargestellter Ausführungsformen näher erläutert. Es zeigen:

Fig. 1 in schematischer Darstellung einen Schnitt durch eine Deponie mit einem unter dem Deponiekörper befindlichen Kontrollraum, der von einem doppelten Dichtring umgeben ist und eine horizontale Feldeingrenzung aufweist,

Fig. 2 in schematischer Darstellung einen Schnitt durch eine neu errichtete Deponie mit dem darunter befindlichen Kontrollraum und der horizontalen Feldeingrenzung,

Fig. 3 im Grundriß einen Kontrollraum mit einer Kassettenaufteilung und einer Erschließungsstraße,

Fig. 4 in vergrößerter Darstellung und im Schnitt einen Teil des Kontrollraumes mit einer auf der Decke des Kontrollraumes vorgesehenen Dichtung, einer abgehängten Dichtung, einem Bodenablauf, einer horizontalen Feldbegrenzung, einer Dränschicht, einem Drändom und Entwässerungs- und Entgasungsleitungen,

Fig. 5 in einer Darstellung ähnlich Fig. 4 eine weitere Ausführungsform eines Kontrollraumes mit kassettenförmigen Plattformelementen einer Plattformdichtung, einer abgehängten Dichtung, einer Dränschicht und Entwässerungssowie Entgasungsleitungen,

Fig. 6 in einer Darstellung entsprechend Fig. 1 einer durch Halbschalen gebildete Plattform eines unterhalb der Deponie befindlichen Kontrollraumes,

Fig. 7 in schematischer Darstellung einen durch Tunnelprofile aufgebauten Kontrollraum, wobei die Tunnelprofile durch Halbschalen miteinander verbunden sind,

Fig. 8 in schematischer Darstellung einen aus unmittelbar aneinandergesetzten Tunnelprofilen gebildeten Kontrollraum,

Fig. 9 eine Grubendeponie.

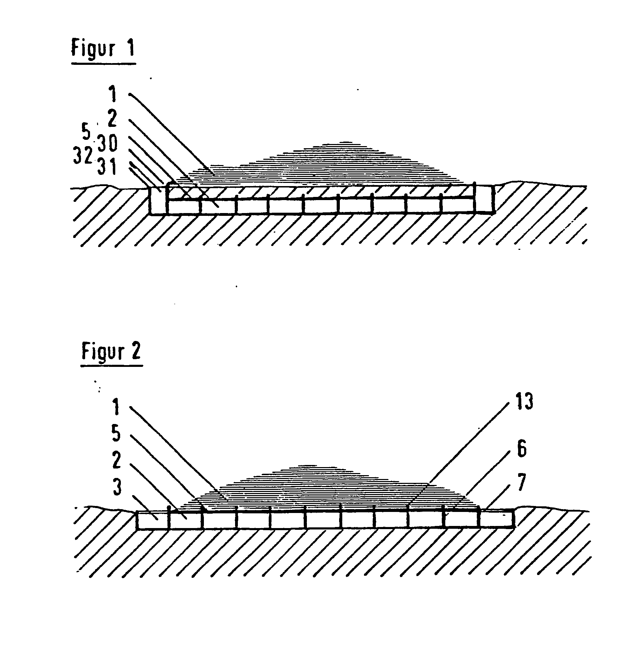

Fig. 1 stellt einen Schnitt durch eine Deponie 1 dar. Sie wird auf ihrer gesamten Grundfläche von einem Kontrollraum 2 unterfangen, der nachträglich tunnelbaumäßig unter die Deponie vorgetrieben wurde. Die aus den Tunneln gebildete Plattform 5 schließt dicht an eine die Deponie umgebende Dichtwand 30 an. Sie ist im Ausführungsbeispiel doppelt ausgebildet, wodurch ein innerer Dichtring 30 und ein äußerer Dichtring 31 gebildet werden, die durch einen dazwischen liegenden Hohlraum 32 voneinander getrennt sind. Er bildet einen Dichtraum, der begehbar und/oder befahrbar ist und somit optisch kontrolliert und ggf. nachgedichtet werden kann.

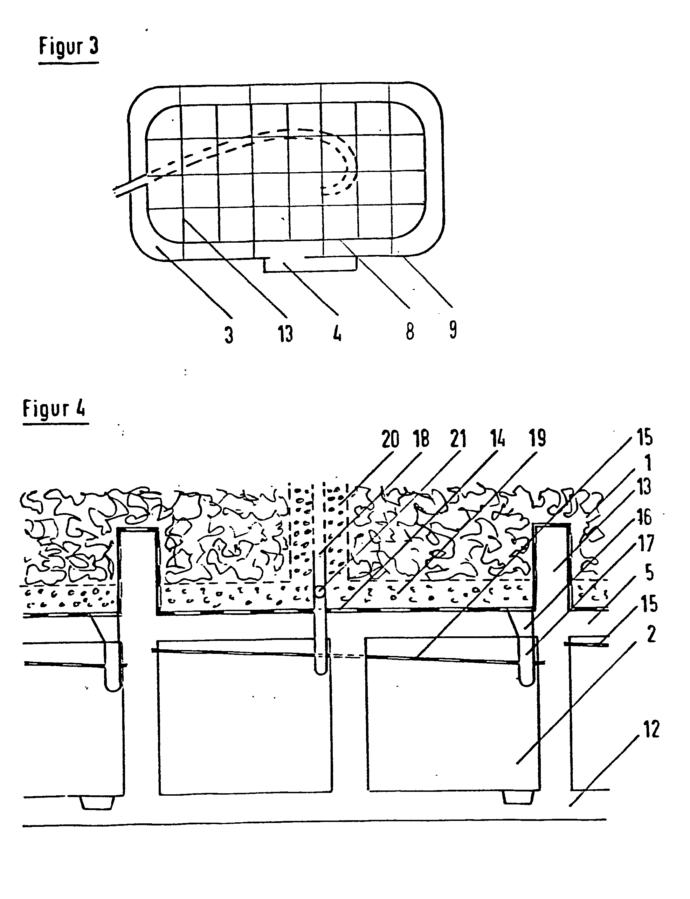

Fig. 2 stellt einen Schnitt durch eine von Anfang an mit der Vorrichtung gedichteten Deponie 1 dar. Sie wird auf ihrer gesamten Grundfläche ebenfalls durch den Kontrollraum 2 unterfangen. Er ist ebenfalls ausreichend hoch, um in ihm Wartungs- und Kontrollgänge oder -fahrten vornehmen zu können. Aus erschliessungstechnischen Gründen wird der Kontrollraum 2 von eine Erschließungsstraße 3 umgeben. Sie wird über einen Zuweg 4 erschlossen (Fig. 3). Die Plattform 5 wird von Stützen 6 oder Wänden 7 getragen. Um den Kontrollraum 2 zuverlässig belüften zu können, damit keine explosiblen Deponiegasgemischbildungen gebildet werden, werden durch die Wände 7 zwechmäßigerweise Gassen gebildet, die an ihrem Ende 8 oder im Bereich des Zuweges 4 durch Schotten 9 verschlossen werden können.

In einer (nicht dargestellten) Ausführungsform wird der Boden 11 des Kontrollraumes 2 ebenerdig angeordnet. Dadurch wird die frei Ventilation des Kontrollraumes 2 ermöglicht.

Messungen der Sickerwasserbeschaffenheit ergaben in der Vergangenheit, daß lokale Unterschiede in der Zusammensetzung erwartet werden können. Um problematische, z.B. toxische, Sickerwässer gezielt sammeln und die dazu- gehörigen Deponieabschnitte auffinden zu kön- nen, ist die Plattformoberseite 5 durch erhabene Feldbegrenzungen in Kassetten 13 rasterförmig unterteilt. Durch die getrennte Erfassung in den zugehörigen Sammelsystemen kann eine diffe- renzierte Sickerwasserprobenahme und -behand- lung vorgenommen werden.

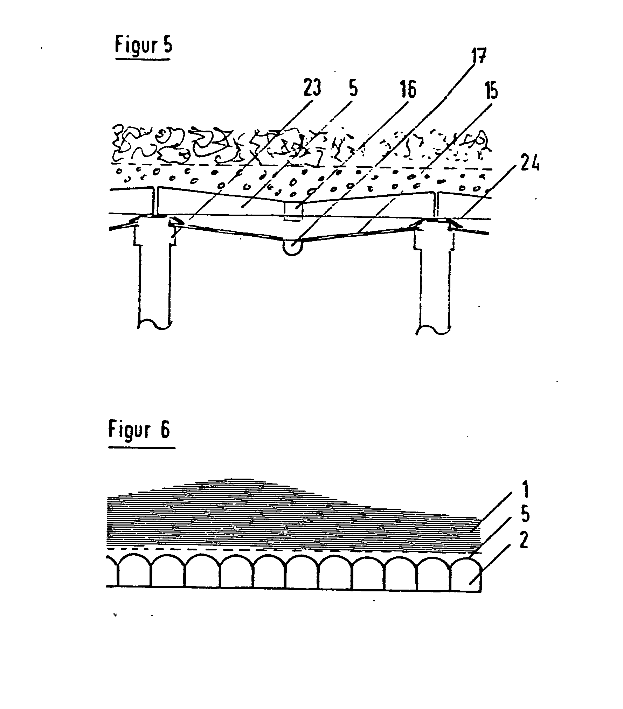

Fig. 4 zeigt im Detail die Plattform 5 mit aufliegender Dichtung 14 und abgehängter Dichtung 15, einer Sickerwasserdurchführung 16 und Nebensammlern 17. Zum Zweck der Deponieentgasung durchdringen Gassammelleitungen 18 die Dichtungen 14, 15 sowie die Plattform 5. Die Gassammelleitungen 18 münden in eine Sickerwasser- und Gasflächendrainage 19 sowie in vertikale Sickerwasser- und Gasdome 20, in denen sie verzweigt werden. Der Boden 12 des Kontrollraumes 2 ist geneigt und kann über Ablaufrillen entwässert werden. Auch die abgehängte Dichtung 15 ist in Richtung auf die Nebensammlern 17 geneigt angeordnet.

Fig. 5 zeigt im Detail eine andere Ausführungsform, bei der als unterschiedliches Merkmal die Plattform 5 in Fertigteilkassettenform mit zentralen Tiefpunkten 16 ausgebildet ist. Die abgehängte Dichtung 15 ist aus vorgefertigten Formen gebildet und auf Konsolen 23 gelagert. Die Stützenköpfe sind mit Dichtungskappen 24 versehen, die an die abgehängte Dichtung 15 anschließen. Sie ist so ausgebildet, daß sie einen zentral liegenden Nebensammler 17 aufweist, in den das Sickerwasser geleitet wird.

Fig. 6 zeigt eine statisch günstige Ausführungsform der Plattform 5 mit axial- bzw. zweiaxialsymmetrischen Halbschalen. Die Platteform bildet wiederum die Decke des Kontrollraumes 2, der unterhalb der Deponie 1 angeordnet ist.

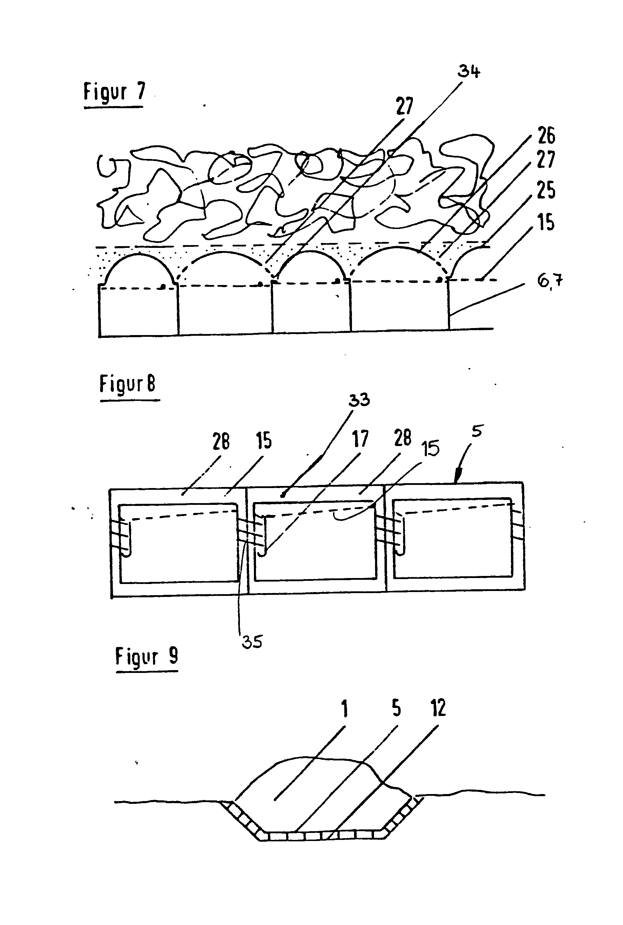

Beim Ausführungsbeispiel gem. Fig. 7 wird die Plattform 5 aus Einzeltunnel 25 gebildet, die durch dazwischengehängte Halbschalen 26 miteinander verbunden sind. Die Entwässerung der Drä-nschicht 19 erfolgt über Durchlässe 27 bevorzugt in den Kontrollraumabschnitt unterhalb der Halbscalen 26. In diesem Falle wird zweckmäßig die abgehängte Dichtung 15 verwendet. Als Wasserdurchlaß ist eine Verbindungsfuge 34 zwischen der Stütze 6 bzw. der Wand 7 und der Halbschale 26 ausgebildet.

Bei der Ausführungsform gem. Fig. 8 sind mehrere Tunnel 28 aneinandergesetzt, die zusammen den Kontrollraum bilden. Durch die dicht aneinandergesetzten Tunnel 28 wird eine gemein- same Plattform 5 gebildet. An jeweils einer Seitenwandung jedes Tunnels 28 ist ein Nebensammler 17 angeordnet, gegen den die angehängte Dichtung 15 geneigt ist, so daß das aufgefangene Sickerwasser in den Nebensammler 17 geleitet wird. Um ein Durchsickern von Sickerwasser im Bereich der aneinanderliegenden vertikalen Seitenwände der Tunnels 28 zu verhindern, ist mindestens eine diese Seitenwände quer durchsetzende Dichtung 35 vorgesehen, die in Richtung auf den benachbarten Nebensammler 17 geneigt ist. Im Ausführungsbeispiel sind drei solcher Dichtungen 35 übereinander angeordnet. Sollte darum Sickerwasser in den vertikalen Seitenwänden der Tunnels 28 oder in der Stoßfuge zwischen den aneinanderliegenden Seitentunnel nach unten gelangen, wird es von den Dichtungen 35 aufgefangen und zum jeweiligen Nebensammler 17 geleitet.

Fig. 9 zeigt die Anordnung eines Dichtungsystemes in einer Grubendeponie. Die Plattform 5 und der Boden 12 des Kontrollraumes sind der Geländeform angepaßt.

Die Kontrollräume 2 können auch aus mehreren übereinander angeordneten Räumen bestehen, die der Kontrolle sowie auch der lagerung von Abfällen dienen.

**Patentansprüche**

1. Vorrichtung zur Fassung von Sickerwasser aus Deponien (1) mit einer unter dem Deponiekörper angeordneten, flächigen, Dichtung (5, 14, 15) und Leitungen (16, 18, 21) im Bereich der Dichtung (5, 14, 15), durch die Sickerwasser abziehbar ist, dadurch gekennzeichnet, daß die Dichtung eine gegen die Deponie abgedichtete, optisch kontrollierbare und feldweise eingeteilte Plattform (5) ist, unter deren zumindest größerem Teil sich ein begeh- oder befahrbarer Keller (2) erstreckt, von dem aus das Sickerwasser durch Durchführungen (16) in der Plattform (5) hindurch abziehbar ist.

2. Vorrichtung nach Anspruch 1, dadurch gekennzeichnet, daß die Dichtung aus der die Decke des Kellers (2) bildenden Plattform (5) und wenigstens einer Dichtung (14, 15) oberhalb und/ oder unterhalb der Plattform (5) besteht.

3. Vorrichtung nach Anspruch 2, dadurch gekennzeichnet, daß die Dichtung der Plattform (5) eine an der Unterseite der Plattform (5) anhaftende Dichtung ist, z.B. ein Anstrich, eine Folie, Bitumen, Kunststoff, metall oder ähnliches.

4. Vorrichtung nach Anspruch 2, dadurch gekennzeichnet, daß unterhalb der Plattform (5) wenigstens eine abgehängte Dichtung (15) angeordnet ist, die aus Formstücken aus dichtem Material, wie Kunststoff oder Metall, besteht.

5. Vorrichtung nach einem der Ansprüche 1 bis 4, dadurch gekennzeichnet, daß die Plattform-Keller-Konstruktion aus mehreren dicht aneinandergesetzten Tunneln (25, 28) gebildet ist.

6. Vorrichtung nach Anspruch 5, dadurch gekennzeichnet, daß die Tunnel (25) über Halbschalen (26) bzw. Platten miteinander verbunden sind, deren Verbindungsfugen (34) als Wasserdurchlaß ausgebildet sind.

7. Vorrichtung nach einem der Ansprüche 1 bis 6, dadurch gekennzeichnet, daß der Keller (2) durch Dichtwände (7) und Schotten (8, 9) in getrennte Gassen unterteilt ist, die bewetterbar oder über die Deponiegase abziehbar sind.

8. Vorrichtung nach einem der Ansprüche 1 bis 7, dadurch gekennzeichnet, daß vom Keller (2) aus Rohrleitungen (18) zum Abziehen von Deponiegasen die Dichtung (14, 15) durchdringen.

9. Vorrichtung nach einem der Ansprüche 1 bis 8, dadurch gekennzeichnet, daß an die Plattform (5) ein vertikaler, entwässerbarer und optisch kontrollierbarer doppelter Dichtraum angeschlossen ist, der den Deponiekörper zumindest teilweise umgibt.

10. Vorrichtung nach Anspruch 9, dadurch gekennzeichnet, daß der Dichtraum (32) durch senkrechte Schlitz- oder Spundwände gebildet ist.

11. Vorrichtung nach einem der Ansprüche 1 bis 10, dadurch gekennzeichnet, daß die Wandungen des Kellers (2) aus einer kombinierten Ortbetonbauweise mit Fertigelementen, wie Halbschalen (26), Deckenplatten (33) oder Stützen (6) bestehen.

## Revendications

1. Dispositif de captage des eaux de suintement de décharges d'ordures (1) comportant des moyens d'étanchéité plans (5, 14, 15), disposés sous la masse de la décharge, et des canalisations (16, 18, 21) dans la zone des moyens d'étanchéité (5, 14, 15), par lesquelles les eaux de suintement peuvent être prélevées, caractérisé en ce que les moyens d'étanchéité sont constitués par une plate-forme (5) étanche par rapport à la décharge, pouvant être contrôlée optiquement et divisée en champs, sous au moins la plus grande partie de laquelle s'étend un souterrain (2) dans lequel on peut se déplacer à pied ou en véhicule et à partir duquel les eaux de suintement peuvent être prélevées par des passages (16) dans la plate-forme (5).

2. Dispositif selon la revendication 1, caractérisé en ce que les moyens d'étanchéité sont constitués par la plate-forme (5) formant le plafond du souterrain (2) et par au moins un moyen d'étanchéité (14, 15) au-dessus et/ou en dessous de la plate-forme (5).

3. Dispositif selon la revendication 2, caractérisé en ce que le moyen d'étanchéité de la plate-form (5) est un moyen d'étanchéité adhérant au côte inférieur de la plate-forme (5), par exemple un enduit, une feuille, du bitume, de la matière plastique, du métal ou analogue.

4. Dispositif selon la revendication 2, caractérisé en ce qu'on dispose en dessous de la plate-forme (5) au moins un moyen d'étanchéité (15) suspendu, qui est constitué par des pièces façonnées en matériau étanche, tel que matière plastique ou métal.

5. Dispositif selon l'une des revendications 1 à 4, caractérisé en ce que la construction plate-form—souterrain est formée de plusieurs tunnels aboutés l'un à l'autre de façon étroite (25, 28).

6. Dispositif selon la revendication 5, caractérisé en ce que les tunnels (25) sont reliés ensemble par des demicoquilles (26) ou des plaques, dont les joints de liaison (34) sont réalisés pour laisser passer l'eau.

7. Dispositif selon l'une des revendications 1 à 6, caractérisé en ce que le souterrain (2) est divisé en voies séparées par des murs d'étanchéité (7) et ses cloisonnements étanches (8, 9), ces voies pouvant être ventilées ou servir à évacuer les gaz de décharge.

8. Dispositif selon l'une des revendications 1 à 7, caractérisé en ce que, partant du souterrain (2), des conduits (18) traversant les moyens d'étanchéité (14, 15) pour évacuer les gaz de décharge.

9. Dispositif selon l'une des revendications 1 à 8, caractérisé en ce qu'à la plate-form (5) est raccordé un espace étanche double vertical, qui peut être drainé et contrôlé optiquement et qui entoure la masse de décharge au moins partiellement.

10. Dispositif selon la revendication 9, caractérisé en ce que l'espace étanche (32) est formé par des rideaux souterrain ou des murs de palplanches verticaux.

11. Dispositif selon l'une des revendications 1 à 10, caractérisé en ce que les parois du souterrain (2) sont constituées par une combinaison de béton coulé sur place avec des éléments préfabriqués tels que demi-coquilles (26), plaques de plafond (33) ou supports (6).

## Claims

1. Apparatus for catching seepage water from dumps (1) with a flat seal (5, 14, 15) located below the body of the dump and pipes (16, 18, 21) in the region of the seal (5, 14, 15), through which seepage water can be drawn off, characterised in that the seal is a platform (5) which is sealed with respect to the dump, can be monitored visually and is divided up into areas, extending below at least the major part of which is a cellar (2) through which it is possible to walk or travel, from which the seepage water can be drawn off through passages (16) in the platform (5).

2. Apparatus according to Claim 1, characterised in that the seal consists of the platform (5) forming the roof of the cellar (2) and of at least one seal (14, 15) above and/or below the platform (5).

3. Apparatus according to Claim 2, characterised in that the seal of the platform (5) is a seal adhering to the under side of the platform (5), for example a coating, a film, bitumen, synthetic material, metal or the like.

4. Apparatus according to Claim 2, characterised in that located below the platform (5) is at least one suspended seal (15), which consists of shaped members of impervious material, such as synthetic material or metal.

5. Apparatus according to one of Claims 1 to 4, characterised in that the platform-cellar construction is formed from several tunnels (25, 28) placed adjacent each other in a tight manner.

6. Apparatus according to Claim 5, characterised in that the tunnels (25) are connected to each other by way of half-shells (26) or plates, whereof the connecting joints (34) are constructed as a culvert.

7. Apparatus according to one of Claims 1 to 6, characterised in that the celler (2) is divided by sealing walls (7) and partitions (8, 9) into separate alleys, which can be ventilated or through which dump gases can be withdrawn.

8. Apparatus according to one of Claims 1 to 7, characterised in that from the cellar (2), pipe lines (18) for the removal of dump gases penetrate the seal (14, 15).

9. Apparatus according to one of Claims 1 to 8, characterised in that connected to the platform (5) is a vertical, double sealing chamber, which can be drained and monitored visually, which sealing chamber surrounds the dump body at least partly.

10. Apparatus according to Claim 9, characterised in that the sealing chamber (32) is formed by vertical louvred or cut-off walls.

11. Apparatus according to one of Claims 1 to 10, characterised in that the walls of the cellar (2) consist of a combined construction of cast-in-situ concrete with prefabricated members, such as half-shells (26), roof panels (33) or supports (6).

Figur 1

Figur 2

Figur 3

3  13  4  8  9

Figur 4

20 18 21 14 19    15
                  1
                  13
                  16
                  17
                  5
                  15
                  2

                  12

2

Figur 5

Figur 6

Figur 7

Figur 8

Figur 9